Europäisches Patentamt

European Patent Office

Office européen des brevets

(11) Publication number: **0 235 072**
**A2**

# EUROPEAN PATENT APPLICATION

(21) Application number: 87630014.6

(22) Date of filing: 23.01.87

(51) Int. Cl.⁴: **B 60 C 11/04**
**B 60 C 11/11**

(30) Priority: 29.01.86 US 823697

(43) Date of publication of application:
02.09.87 Bulletin 87/36

(84) Designated Contracting States:
AT BE DE FR GB LU NL SE

(71) Applicant: THE GOODYEAR TIRE & RUBBER COMPANY
1144 East Market Street
Akron, Ohio 44316-0001 (US)

(72) Inventor: Lindner, Daniel John
531 Waterside, Canal Fulton
Ohio 44614 (US)

Bradisse, John Lawrence
75 River Park Blvd.
Munroe Falls Ohio 44262 (US)

(74) Representative: Weyland, Joseph Jean Pierre
Goodyear Technical Center Luxembourg Patent
Department Avenue Gordon Smith
L-7750 Colmar-Berg (LU)

(54) All-season pneumatic tire with improved tread stiffness.

(57) All-season radial-ply pneumatic tire for passenger and light-truck vehicles. A belt structure is positioned radially outwardly of the radial carcass ply and a rubber tread is positioned radially outwardly of the belt structure. The tread has a road contact surface that includes rows of blocks separated by grooves. Groove segments between the individual blocks in the circumferential rows have reduced depths that increase the stiffnesses of the rows to improve the uniformity of the tread wear characteristics. Depth reductions in groove segments in adjacent rows are dimensionally and geometrically selected to provide increased stiffnesses in proportion to the distribution of load pressures that occur laterally across the tread surface when such tread surface is normally loaded.

FIG.I

EP 0 235 072 A2

Bundesdruckerei Berlin

**Description**

All-Season Pneumatic Tire With Improved Tread Stiffness

Background

This invention relates to an all-season radial-ply pneumatic tire for passenger and light-truck vehicles. An all-season pneumatic tire is regarded as one which currently qualifies for a mud and snow (M&S) rating under the criteria for such rating established by the Rubber Manufacturers Association, Akron, Ohio. In general, such rating requires that the tire tread have full-depth grooves that are angled laterally toward the respective lateral edges of the tread surface for at least one-half inch and such grooves are required to have a width of at least 0.060 inch.

All-season tires are characterized by grooves that define blocks of rubber, and sometimes one or more ribs, in the tread surface. This results in a more "aggressive" appearance than that of a more conventional fully-ribbed tire and provides improved traction characteristics in snow and under wet conditions as compared to conventional ribbed tire. All-season tires are distinguished from snow tires in that the former are required to satisfy all Federal Motor Vehicle Safety Standard 109 tests applicable to radial passenger tires in general, but the latter are not required to satisfy the provisions in such standards relating to high-speed test performance.

With the advent of front-wheel drive motor vehicles, there has in some applications been a tendency for increased nonuniformity of tread wear. This is more pronounced in all-season tire tread designs because of the reduced circumferential stiffness of the block elements in the tread as compared to the stiffnesses of the ribs in the rib-type radial tire. Once the nonuniform wear of a block element in a tread design begins, it usually continues throughout the life of the tire tread. Irregular wear characteristics of a radial-ply tire tread design often are aggravated by nonuniformity of the tread's pressure distribution that occurs when the tire is under load. This nonuniformity frequently consists of greater tread pressures at the mid-circumferential plane and laterally-outer portions of the tread surface than in regions between the laterally-outer portions and the mid-circumferential plane.

Summary of the Invention

This invention provides a radial-ply pneumatic tire for passenger and light-truck vehicles that retains the all-season characteristics desirable for traction performance under wet and dry conditions, while providing selective stiffening of rows of block-type tread elements to improve the uniformity of wear of the individual block elements and the overall tread design. The selective stiffening has the further advantage of reducing the rolling resistance of the tire as compared to comparable all season tires that do not have the stiffening means utilized in the pneumatic tire of the invention.

In accordance with the invention, an all-season radial-ply pneumatic tire for passenger and light-truck vehicles comprises at least one radial carcass ply and a belt structure positioned radially outwardly of the carcass ply. The belt structure includes at least one ply of cords oriented at both positive and negative angles with respect to the mid-circumferential plane of the tire. The cord angles are in the magnitude range from 17° to 30°.

A rubber tread is positioned radially outwardly of the belt structure of the pneumatic tire and has a surface adapted for use on paved road surfaces. The tread has grooves of width at the tread surface of at least 2 mm, and the grooves of such minimum width define first and second rows of rubber blocks that extend circumferentially around the tread surface. The rubber blocks of each of the rows are separated from one another by groove segments that extend across an imaginary circumferential line which intersects each of the rubber blocks in such row. There are no other groove segments such line that have a width of at least 2 mm and that separate the blocks. The groove segments have depths, relative to the tread surface, that are reduced from the average depths of other grooves defining the blocks in the respective rows thereof. The reduced depths of the groove segments increase the stiffnesses of the respective rows of rubber blocks, thereby, to improve the uniformity of wear of such blocks.

A third row of rubber blocks is positioned between the first and second rows of rubber blocks. The rubber blocks of the third row are separated from one another by groove segments of a width at the tread surface of at least 2 mm, and the groove segments extend across an imaginary circumferential line which intersects each of the rubber blocks in the third row. Each of the groove segments in the third row have depths, again relative to the tread surface, reduced from the average depths of other grooves defining the blocks in the third row. The reduced depths increase the stiffness of the third row of rubber blocks, thereby, to improve the uniformity of wear of such blocks.

The reduction of depths in the groove segments separating the blocks in the respective first, second and third rows are designed geometrically or otherwise to increase selectively the stiffnesses of such rows in proportion to the distribution of load pressures that occur laterally across the tread surface when such tread surface is in normally loaded contact with a paved surface. This is a substantial departure from prior art practices of providing uniform depth of grooves surrounding or between rubber blocks.

The invention may be better understood by reference to the detailed description which follows and to the drawings.

Brief Description of the Drawings

Figure 1 is a partial plan view of the tread of an all-season radial-ply pneumatic tire according to the invention;

Figure 2 is a sectional view of the pneumatic tire of Figure 1, the section being taken along the line 2-2 in Figure 1;

Figure 3 is a partial plan view of a tire tread similar to that shown in Figure 1, but having a circumferential groove in the mid-circumferential plane rather than a rib.

Detailed Description

In the drawings, symmetrically similar components on the right-hand side of the figures are given primed numerals corresponding to the components on the left-hand side.

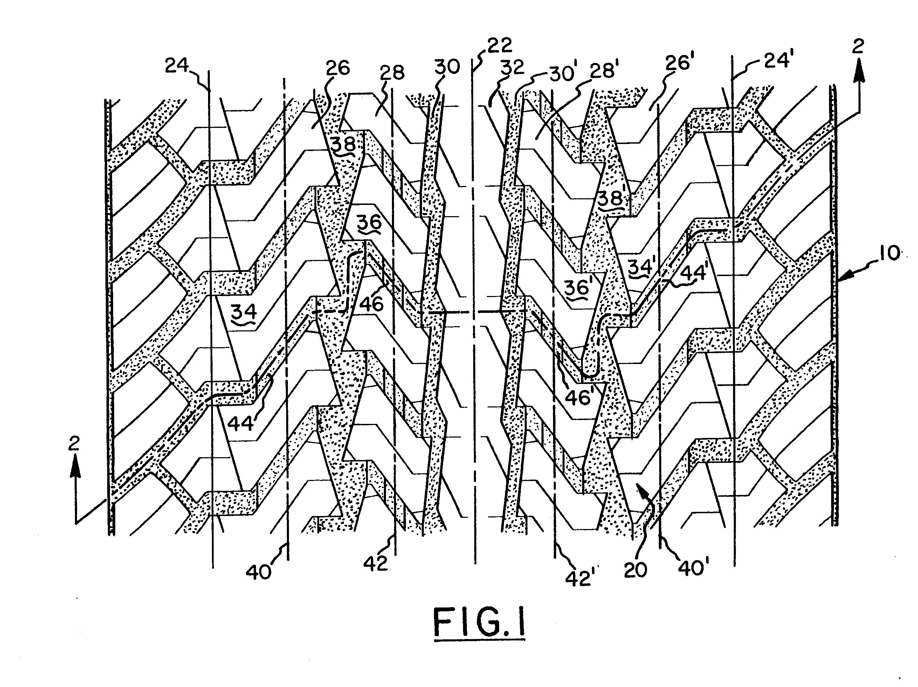

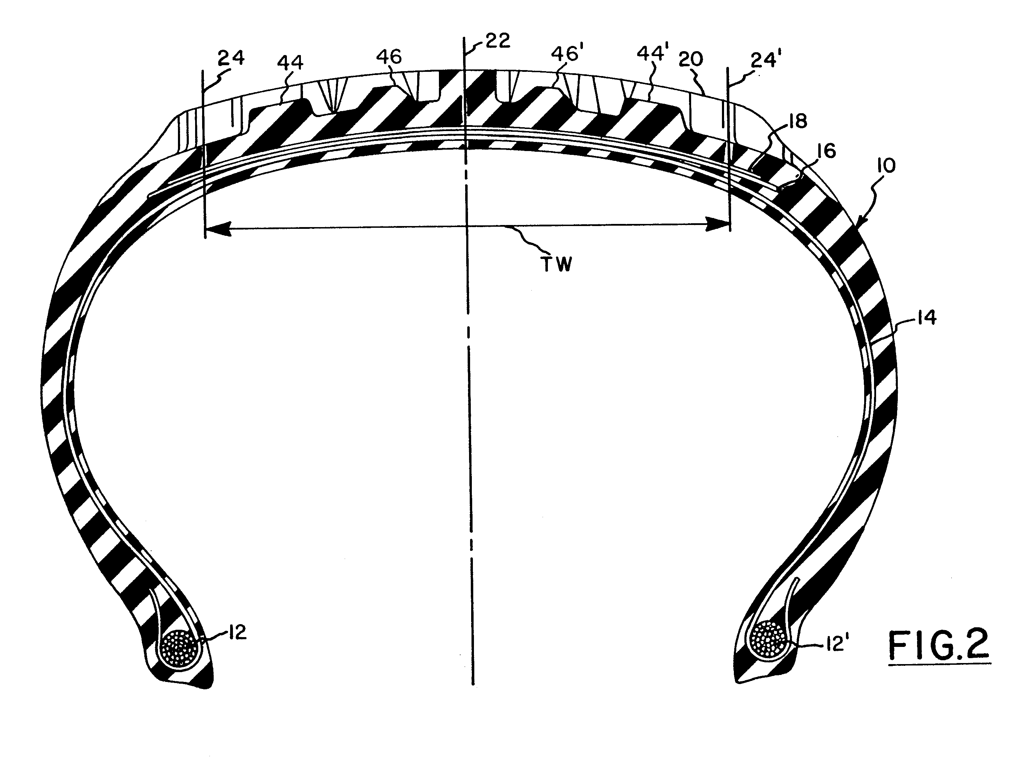

With particular reference now to Figures 1 and 2, there is shown a radial-ply pneumatic tire, generally designated by the numeral 10, having beads 12, 12' between which at least one carcass ply 14 extends within a rubber matrix. Carcass ply 14 has cords which are oriented in the radial direction of the tire. A belt structure is provided and is positioned radially outwardly of the carcass ply as viewed at the mid-circumferential plane 22 of the tire. The belt structure includes at least one ply of cords that are oriented at both positive and negative angles with respect to the mid-circumferential plane. The positive and negative angles of the cords in the belt structure fall in the magnitude range from 17° to 30°. Preferably, the belt structure has at least two plies 16 and 18, the cords in the ply 16 being oppositely oriented with regard to the mid-circumferential plane 22 as compared to the parallel cords in the belt ply 18.

The term "cord" as used herein is meant to include both textile and steel cord or cable.

The pneumatic tire 10 has an all-season tread design 20 most clearly illustrated in Figure 1 but with details of certain groove segments more clearly seen in Figure 2.

The rubber tread 20 is positioned radially outwardly of the belt structure and has a surface that is adapted for use on paved road surfaces. The tread has grooves that are of width at the tread surface of at least 2 mm. All of the grooves hereinafter mentioned are to be considered to have widths equal to or greater than the minimum width of 2 mm. The tread width TW in Figure 2 is indicated by the lines 24, 24' appearing at the respective lateral edges of the tread surface. These lines approximately define the portion of the tread in contact with a paved road surface when the pneumatic tire is under loads normal for its customary use as a passenger vehicle or light-truck tire.

The tread 20 includes two rows of rubber blocks 26, 26' individually designated by the numerals 34, 34'. The rubber blocks 34, 34' extend circumferentially around the tire and are defined by circumferential grooves 38, 38' and by groove segments 44, 44' that extend to the lateral edges 24, 24' of the tread surface. The groove segments 44, 44', separate the rubber blocks 34, 34' from one another; the groove segments extend across imaginary circumferential lines 40, 40' which intersect each of the rubber blocks 34, 34' in the rows 26, 26'. There are no other groove segments along the line 40, 40' that are of the minimum 2 mm width noted above and that separate the individual blocks 34, 34' from one another along such line.

The tread 20 also includes third and fourth rows 28, 28' of rubber blocks that extend circumferentially around the tire. The individual blocks 36, 36' in the respective rows 28, 28' have groove segments 46, 46' separating them along the imaginary circumferential lines 42, 42'. The third and fourth rows 28, 28' are spaced from the mid-circumferential plane 22 and are separated from one another by circumferentially-extending grooves 30, 30' and the circumferentially-extending rib 32, which is defined by grooves 30, 30'.

The blocks 34, 34' are identical to one another, except as to dimensional variations arising from normal circumferential pitching relationships commonly used in pneumatic tires to control tire noise. However, blocks 34' could be made the mirror images of blocks 34, as could blocks 36 be made the mirror images of blocks 36'. Were such changes to be made, the tread design would be converted from a non-directional tire to a tire that is directional in character, which in some cases provides traction or performance advantages not available in a non-directional design.

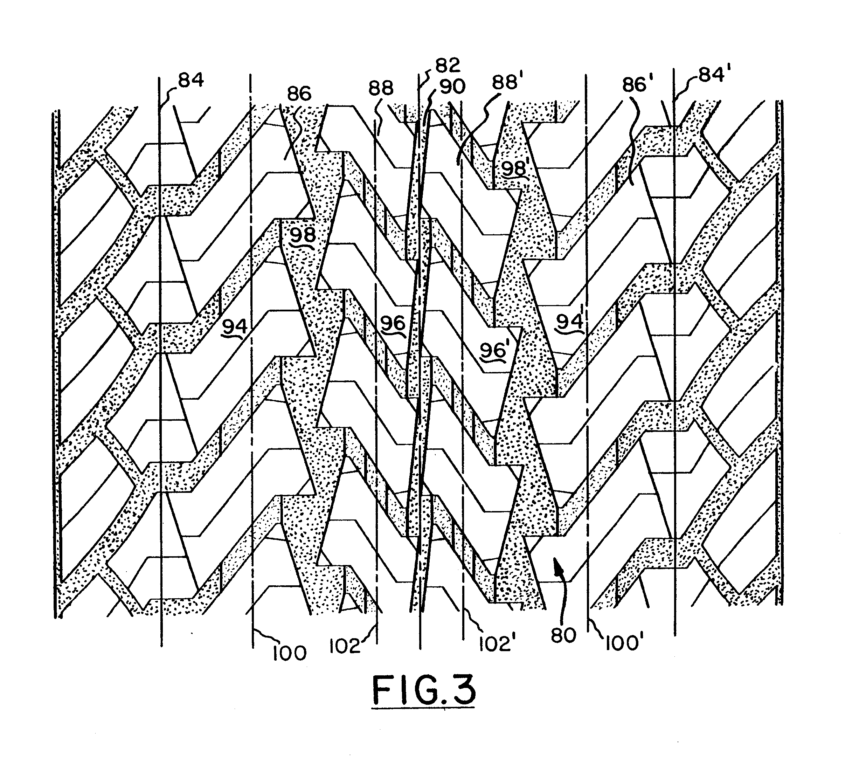

With particular reference now to Figure 3, the tread design generally designated by the numeral 80 includes laterally opposed rows of block elements 86, 86' that extend over to the lateral edges 84, 84' of the tread surface. Circumferential grooves 98, 98' separate these blocks 94, 94' from the blocks 96, 96' in the inner circumferentially-extending rows 88, 88'.

The rows 86, 86' extend circumferentially around the tread and are interconnected by imaginary lines 100, 100'. Similarly, circumferentially-extending imaginary lines 102, 102' interconnect the blocks 96, 96' in the inner rows 88, 88'. Groove segments (of configurations similar to segments 44, 44', and 46, 46' in Figure 1) separate the individual blocks in the various rows.

The tread surface 80 of Figure 3 differs from that of Figure 1 primarily in that it includes a circumferentially-extending groove 90 at the mid-circumferential plane, the groove 90 separating the rows 88 and 88' from one another laterally, and by the absence of a center rib or equivalent row of blocks.

With particular reference again to Figures 1 and 2, it may be seen that the groove segments 44, 44' have a depth which is reduced from the average depth of other grooves that define the blocks 34, 34'. More specifically, in Figure 2 it may be seen that the groove segments 44, 44' separating the blocks 34, 34' have a reduced depth that creates a mass of rubber in the base of the groove that is of substantially rectangular cross-section. The height of this rubber mass above the average groove depth is approximately half of the average groove depth; that is, the groove depth has been reduced in a portion of the groove segment 44 to a depth of about half of the average groove depth. This reduction in groove depth in the groove segments 44, 44' stiffens the respective rows of rubber blocks 26, 26'. Such stiffening, which occurs circumferentially, laterally, and radially, is particularly advantageous in the circumferential direction because it reduces the distortion of the blocks circumferentially as they pass through the area of contact of the tread surface 20 with a paved road surface when the normally loaded pneumatic tire is in use.

The groove segments 46, 46' separating the blocks 36, 36' in the rows 28, 28' have depth reductions which are best seen in Figure 2. The depth reductions in the groove segments 46, 46' produce a mass of rubber in the base of these groove segments that preferably has a trapezoidal shape. This mass of rubber provides an increase in stiffness of the rows of blocks 28, 28', again of particular importance in the circumferential direction, but the increase in stiffness; and the manner in which it is achieved, is different than that provided by the depth reductions in the groove segments 44, 44'.

A pneumatic tire characteristically has a variation in the pressure distribution extending laterally across the area of contact of the tread surface of the loaded pneumatic tire with a paved road surface. The pressure distribution commonly is such that the laterally-opposed portions of the tread surface experience greater radially-directed pressures when in the contact area than do the tread portions between such laterally-opposed areas and the mid-circumferential plane. In other words, outer rows 26 and 26' of rubber tread blocks would experience higher pressures than inner rows 28 and 28' positioned between the mid-circumferential plane 22 and the outer rows. Also, the center row of blocks or rib 32 would experience a greater pressure than would the rows of blocks 28, 28'. Overall there would be a road-contact pressure distribution laterally across the tread surface 20 that would have the shape of the letter W. The selective use of groove depth reductions between block elements as indicated above allows the tread stiffnesses to be increased and selectively varied with greater stiffnesses being provided in the regions of the tread that experience greater pressures during normal loaded use of the tire. Such proportional stiffening of the rubber blocks in the tread substantially improves the uniformity of the wear characteristics of the entire tread surface and the individual rubber blocks. Such uniformity of wear is important because, once nonuniform wear begins, it generally continues throughout the useful life of the tire. This can cause harshness of ride or other undesirable characteristics in the vehicle on which the tire is used, can cause excessive wear rates, and can present an appearance problem as well.

The use of selected or different stiffening in the groove segments separating the rubber tread blocks in the various rows allows the tire tread wear patterns to be better controlled. This is achieved without unduly compromising the ability of the laterally-extending grooves in the tire to dissipate water and snow in the manner desired for retention of performance expected from an all-season tire.

The rectangular and trapezoidal shapes of the masses of rubber in the bottoms of the groove segments 44, 44', 46, and 46' are desirable providing the proportionally selected stiffness increases for the specific tread design illustrated in this description, but other geometrical shapes for the cross-sectional areas in the bottoms of such groove segments may be desirable in other tire designs. A reduction of depth of at least about twenty-five percent of the average groove depth would be desirable where significant increase in circumferential stiffness is desired. Also, the length of the groove segment extending between or separating the blocks is important in this regard, as is the size and circumferential length of the individual rubber blocks.

## Claims

1. An all-season radial-ply pneumatic tire for passenger and light-truck vehicles, the tire comprising:

(a) a radial carcass ply;

(b) a belt structure positioned radially outwardly of the carcass ply, the belt structure including at least one ply of cords, the belt structure having cords oriented at both positive and negative angles, in the magnitude range from 17° to 30°, with respect to the mid-circumferential plane of the tire;

(c) a rubber tread positioned radially outwardly of the belt structure and having a surface adapted for use on paved road surfaces, the tread having grooves of width at the tread surface of at least 2 mm, the grooves of such minimum width defining first and second rows of rubber blocks extending circumferentially around the tread surface, the rubber blocks of each row being separated from one another by groove segments extending across an imaginary circumferential line which intersects each of the rubber blocks in such row, there being no other groove segments along such line having a width of at least 2 mm separating the blocks, the groove segments having depths, relative to the tread surface, reduced from the average depths of other grooves defining the blocks in the respective row thereof, the reduced depths increasing the stiffnesses of the respective rows of rubber blocks, thereby, to improve the uniformity of wear of such blocks;

(d) a third row of rubber blocks positioned between the first and second rows of rubber blocks, the rubber blocks of the third row being separated from one another by groove segments of a width at the tread surface of at least 2 mm, the groove segments extending across an imaginary circumferential line which intersect each of the rubber blocks in the third row, each of the groove segments in the third row having depths, relative to the tread surface, reduced from the average depths of other grooves defining the blocks in the third row, the reduced depths increasing the stiffness of the third row of rubber blocks, thereby, to improve the uniformity of wear of such blocks; the tire being characterized by

(e) the reduction of depths in the groove segments separating the blocks in the first, second, and third rows increasing the stiffnesses of such rows in proportion to the distribution of load pressures laterally across the tread surface when such tread surface is in normally loaded contact with a paved surface.

2. An all-season pneumatic tire as in claim 1, characterized in that the manner in which the depth of the groove segments is reduced in such segments between the blocks of the third row differs from the manner in which such depths are reduced in the groove segments separating the blocks in the other two rows, thereby, to control selectively the stiffness of the third row of blocks relative to the other two rows of blocks.

3. An all-season pneumatic tire as in claim 2, characterized in that further includes a fourth row of rubber blocks identical to, or the mirror image of, the third row of blocks, the fourth row being positioned between the third row of blocks and one of the other two rows of rubber blocks.

4. An all-season pneumatic tire as in claim 3, characterized in that the tread has at least one circumferential groove between the third and fourth rows of rubber blocks and both the third and fourth rows are laterally spaced from the mid-circumferential plane.

5. An all-season pneumatic tire as in claim 4, further characterized in that it includes a row of rubber blocks, or a rib, positioned in the mid-circumferential plane of the tire and separating the third and fourth rows of rubber blocks from one another.

6. An all-season pneumatic tire as in any of claims 1 through 5, characterized in that the increases in stiffness in the respective rows of rubber blocks vary with normally-loaded-tire pressure distribution across the tread surface, the variation being achieved by use of different cross-sections of the rubber masses in the bottoms of the groove segments separating the rubber blocks in the respective rows thereof.

7. An all-season pneumatic tire as in claim 6, characterized in that one of the cross-sections is trapezoidal.

FIG.1

0235072

FIG.2

FIG.3